Europäisches Patentamt

European Patent Office

Office européen des brevets

(11) Veröffentlichungsnummer: **0 310 742 B1**

# EUROPÄISCHE PATENTSCHRIFT

(45) Veröffentlichungstag der Patentschrift: **26.08.92**

(21) Anmeldenummer: **88105070.2**

(22) Anmeldetag: **29.03.88**

(51) Int. Cl.⁵: **B01D 21/24**, B65G 33/12, B01D 43/00

(54) **Vorrichtung zur Entwässerung.**

(30) Priorität: **09.10.87 DE 3734172**

(43) Veröffentlichungstag der Anmeldung:
**12.04.89 Patentblatt 89/15**

(45) Bekanntmachung des Hinweises auf die
Patenterteilung:
**26.08.92 Patentblatt 92/35**

(84) Benannte Vertragsstaaten:
**AT BE CH DE FR GB IT LI NL**

(56) Entgegenhaltungen:
**WO-A-81/00394
DE-A- 2 002 642
DE-C- 1 099 938
GB-A- 841 234
US-A- 2 569 812**

(73) Patentinhaber: **Frankenberger, Dieter
Vor dem hohen Stein
W-6301 Pohlheim 2(DE)**

(72) Erfinder: **Frankenberger, Dieter
Vor dem hohen Stein
W-6301 Pohlheim 2(DE)**

(74) Vertreter: **Missling, Arne, Dipl.-Ing.
Patentanwalt Bismarckstrasse 43
W-6300 Giessen(DE)**

## Beschreibung

Die Erfindung betrifft eine Vorrichtung zur Entwässerung mit einer zur Horizontalen geneigt angeordneten, in einem Behälter drehbaren, eine nach oben gerichtete Förderung bewirkenden Förderschnecke.

Eine Vorrichtung der obengenannten Art kann beispielsweise zur Sandklassierung, d. h. zur Entwässerung von Sänden, wie sie beispielsweise in Kläranlagen anfallen, verwendet werden. Auch ist es möglich, mittels der erfindungsgemäßen Vorrichtung Klärschlamm zu entwässern. Weiterhin ist die Vorrichtung ganz allgemein zur Trennung flüssiger Bestandteile eines aus flüssigen und festen Bestandteilen bestehenden Gemisches verwendbar.

Aus der DE-OS 34 00 986 ist eine Fördereinrichtung bekannt, bei welcher eine geneigte Förderbahn, welche in Form einer Förderschnecke ausgebildet und zur Horizontalen geneigt angeordnet ist, zur Förderung verschiedenster Produkte dient.

Bei bekannten Vorrichtungen der eingangs genannten Art erweist es sich als schwierig oder aufwendig, das Gemisch aus festen und flüssigen Bestandteilen zu entwässern, d.h. die flüssigen Bestandteile von den festen Bestandteilen zu trennen.

Der Erfindung liegt die Aufgabe zugrunde, eine Vorrichtung der eingangs genannten Art zu schaffen, welche bei einfachem Aufbau und betriebssicherer Wirkungsweise eine sichere Entwässerung, d. h. Trennung der flüssigen Bestandteile von festen Bestandteilen eines Gemisches gewährleistet und welche insbesondere bei geringem Wartungsaufwand kostengünstig zu betreiben ist.

Erfindungsgemäß wird die Aufgabe dadurch gelöst, daß die Förderschnecke zumindest oberhalb eines oberen Fördergutniveaus in zumindest eine untere Schnecke und in zumindest eine obere Schnecke unterteilt ist, welche gemeinsam mittels einer Antriebseinrichtung drehbar sind, und daß der jeweils obere Endbereich der unteren Schnecke in axialer Richtung oberhalb des jeweils unteren Endbereichs der oberen Schnecke angeordnet ist.

Durch die erfindungsgemäße Ausbildung der Förderschnecke ist es möglich, durch Ausnutzung des Umstandes, daß die Fließgeschwindigkeit des Wassers wesentlich größer ist, als die Fließgeschwindigkeit der Festanteile, eine wirkungsvolle Trennung des Wassers, d. h. der flüssigen Bestandteile, vorzunehmen. Durch die Unterteilung der Förderschnecke ist es an den Übergangsbereichen der unteren Schnecke zur oberen Schnecke möglich, die Förderung der festen Bestandteile unbeeinflußt aufrechtzuerhalten, während gleichzeitig in wirkungsvoller Weise das Wasser, bedingt durch die Neigung der Drehachse der Förderschnecke zur Horizontalen, nach unten in den Behälter zurückfließen kann. Dies wird insbesondere dadurch hervorgerufen, daß der obere Endbereich der unteren Schnecke oberhalb des unteren Endbereichs der oberen Schnecke angeordnet ist. Es tritt somit kein Stau- oder Rückgleiteffekt des fördernden Gutes auf, andererseits ist es möglich, daß das in dem zu fördernden Gemisch enthaltene Wasser durch die Trennung des schraubenförmigen Schneckenganges ungehinderter und in wesentlich einfacherer Weise zurückfließen kann.

In vorteilhafter Weise sind das obere Ende der unteren Schnecke und das untere Ende der oberen Schnecke jeweils in einer die Drehachse eines Förderrohres einschließenden Ebene angeordnet. Es kann sich jedoch auch als vorteilhaft erweisen, daß der obere Endbereich der unteren Schnecke und der untere Endbereich der oberen Schnecke in axialer Projektion überlappend angeordnet sind. Auf diese Weise wird gewährleistet, daß das Wasser ungehindert in axialer Richtung abfließen kann. Durch eine geringfügige Überlappung wird verhindert, daß bei einer stärkeren Neigung der Drehachse der Förderschnecke zur Horizontalen das Fördergut zurückrutscht. Die Überlappung liegt somit in eine Bereich zwischen 0 mm, d.h. es ist keine Überlappung gegeben, und einem Bereich geringfügiger Überlappung, welcher vorteilhaft 10 % des äußeren Schneckendurchmessers betragen sollte. Bei einer stärkeren Überlappung wäre eine Konfiguration gegeben. die mit einer doppelläufigen Förderschnecke vergleichbar wäre. Eine derartige stärkere Überlappung würde den Entwässerungswirkungsgrad beträchtlich herabsetzen. Der Spalt bzw. die Überlappung bemißt sich nach dem unterschiedlichen Fließverhalten der zu trennenden Stoffe.

In vorteilhafter Weise sind der obere Endbereich der unteren Schnecke und der untere Endbereich der oberen Schnecke in axialer Richtung um einen Betrag von mindestens 1 mm versetzt. Diese Versetzung in axialer Richtung ergibt sich zu einen aus der Steigung der Förderschnecke und zum anderen daraus, zum einen ein freies Durchströmen des nach unten ablaufenden Wassers zu gewährleisten und zum anderen ein übermäßiges Zurückgleiten oder Zurückrutschen des zu fördernden Gemisches zu verhindern. Bei einer Ausgestaltung in dem obengenannten Größenbereich kann eine Optimierung hinsichtlich des Rücklaufs des Wassers und der Förderung der Festbestandteile erzielt werden.

Eine besonders günstige Ausgestaltung ist dadurch gegeben, daß die Schnecken in dem mit diesen drehbaren Förderrohr angeordnet sind. Durch eine derartige Ausbildung ist die Förderschnecke von der Gestaltung des Behälters im wesentlichen unabhängig, da das Förderrohr einen Durchströmungskanal bildet, durch welchen, bedingt durch die Drehung des Förderrohrs und der in diesem befestigten Schnecke, das zu fördernde Gut strömt.

In vorteilhafter Weise beträgt die Neigung der Drehachse der Förderschnecke 5° bis 45° zur Horizontalen. Bei einer schwächeren Neigung erfolgt kein Zurückfließen des Wassers, bei einer stärkeren Neigung ist keine ausreichende Förderleistung der Vorrichtung mehr gegeben. Es hat sich herausgestellt, daß bei der erfindungsgemäßen Vorrichtung das Optimum der Neigung bei 20° liegt, da dann sowohl der Wasserrücklauf als auch die Förderleistung jeweils einen optimalen Wert erreichen. Weiterhin erweist es sich als vorteilhaft, wenn der Steigungswinkel der Schnecke in einem Bereich von 5° bis 40° ausgebildet ist. Hierbei hat es sich erfindungsgemäß erwiesen, daß der Optimalwert bei 25° liegt.

Eine weitere günstige Ausbildung ist dadurch gegeben, daß das Förderrohr in einem einen U-förmigen Querschnitt aufweisenden Bereich des Behälters angeordnet ist, wobei es sich als vorteilhaft erweisen kann, wenn die Außenfläche des Förderrohres mit einer Förderschnecke versehen ist, deren Förderrichtung entgegengesetzt der der Schnecken ausgebildet ist. Diese Ausgestaltung gewährleistet zum einen. daß das in dem Behälter befindliche zu fördernde Gemisch aus Wasser und Feststoffen in optimaler Weise der Förderschnecke zugeführt wird. Durch das Anbringen einer weiteren Förderschnecke an der Außenfläche des Förderrohres, deren Förderrichtung nach unten gerichtet wird, wird verhindert, daß Material, welches zwischen dem Förderrohr und dem U-förmigen Bereich des Behälters eingedrungen ist sich ablagert und zu Betriebsstörungen führt. Es wird vielmehr das gesamte in dem Behälter befindliche Gemisch durch die Einwirkung dieser weiteren Förderschnecke nach unten zum Einlauf des Förderrohres bewegt.

Zur Erhöhung der Förderleistung kann es sich als vorteilhaft erweisen, das Rohr am unteren Ende der unteren Schnecke auszuklinken, d. h. mit einer Ausnehmung zu versehen. Bei einer Drehung des Förderrohrs bzw. der Schnecke ist somit ein besonders optimaler Einlauf des Gemisches in das Förderrohr gewährleistet.

Eine weitere besonders günstige Weiterbildung der Erfindung liegt darin, daß die Lagerung des Förderrohrs an dem Behälter oberhalb des Fördergutniveaus angeordnet ist, wobei die Lagerung in vorteilhafter Weise in Form eines außen verzahnten, mit einem Motorritzel kämmenden Kugeldrehkranzes ausgebildet ist. Auf diese Weise wird die Lagerung nicht vom Inhalt des Behälters, d. h. von dem zu fördernden Gemisch, welches etwa aus Sanden und Wasser bestehen kann, beeinflußt und in Mitleidenschaft gezogen. Auf diese Weise wird eine erhebliche Verschleißreduzierung in der Lagerung erzielt, was sich zum einen hinsichtlich der Lebensdauer der Lagerung und zum anderen hinsichtlich ihrer Herstellungskosten besonders vorteilhaft auswirkt. Weiterhin ist es möglich, durch geringere Reibung in der Lagerung den Energieverbrauch für die Betätigung der Vorrichtung erheblich herabzusenken.

In vorteilhafter Weise ist die obere Schnecke in mehrere einzelne Teilschnecken unterteilt. Diese besonders vorteilhafte Ausgestaltung ermöglicht es, in dem Bereich der Förderschnecke, welcher oberhalb des Fördergutniveaus angeordnet ist, eine besonders wirksame Entwässerung vorzunehmen, da es möglich ist, mehrere Förderschnecken, welche allesamt an einer gemeinsamen Drehachse angeordnet sind, zu verwenden. Die Gesamtlänge jeder einzelnen Förderschnecke ergibt sich aus der Gesamtsteigung der Förderschnecken und dem Abstand der einzelnen Schneckenabschnitte in Richtung der Drehachse. Es ist möglich, einzelne Schnecken auszubilden, welche jeweils einen Schneckengang aufweisen, mit einer größeren Steigung als der Versatz der Schneckengänge zueinander. Es ist jedoch auch möglich, einzelne Schnecken zu verwenden, welche eine größere axiale Länge aufweisen.

Ein weiterer Vorteil der erfindungsgemäßen Vorrichtung liegt darin, daß es möglich ist, mit einer sehr geringen Länge der Förderschnecke eine sehr hohe Entwässerungswirkung zu erzielen und damit eine sehr geringe Bauhöhe, sowie geringe seitliche Abmessungen der Vorrichtung zu erreichen.

Im folgenden wird die Erfindung anhand eines Ausführungsbeispiels in Verbindung mit der Zeichnung beschrieben. Darin zeigt:

Fig. 1   eine schematische seitliche Ansicht, im Schnitt, der erfindungsgemäßen Vorrichtung;

Fig. 2   eine Schnittansicht gemäß der Linie II-II von Fig. 1;

Fig. 3   einen Schnitt entlang der Linie IV-IV von Fig. 2.

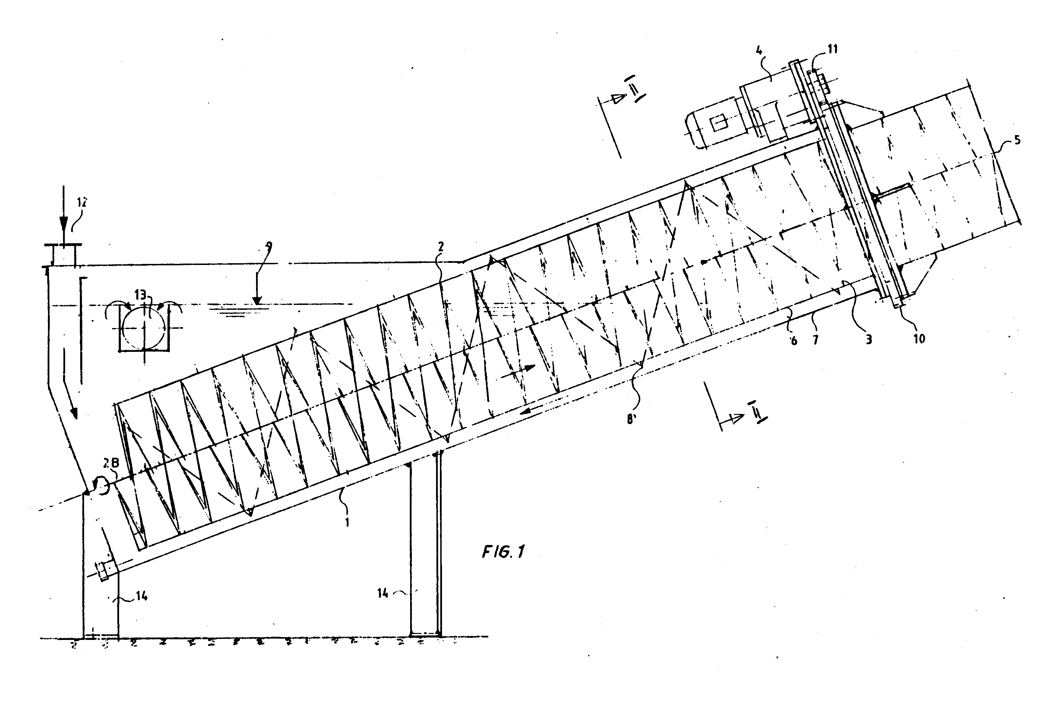

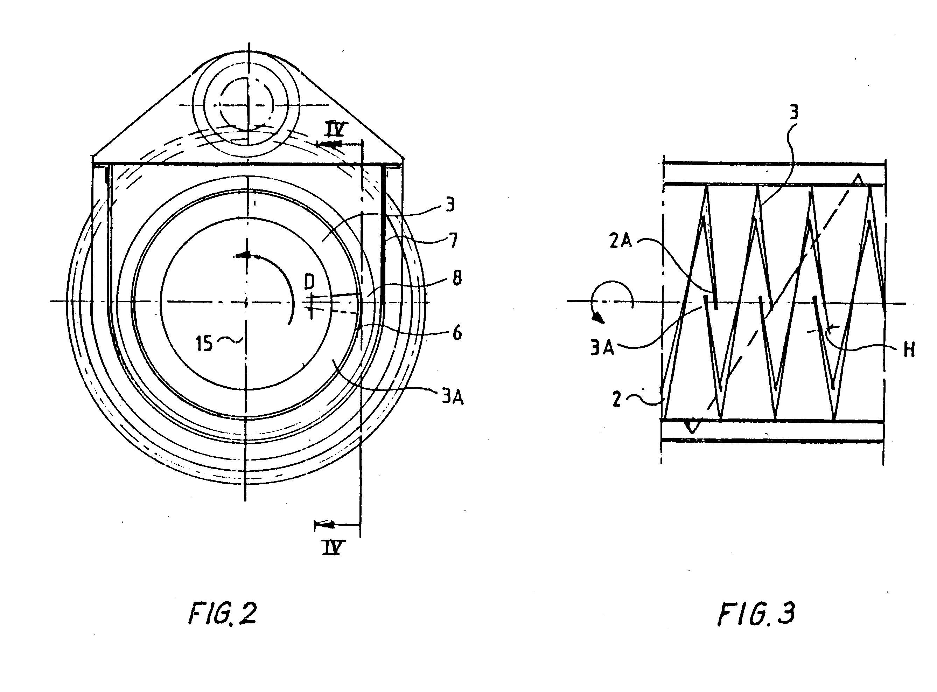

Fig. 1 zeigt einen Behälter 1, welcher mittels Stützen 14 auf einer Unterlage aufgestellt ist. Der Behälter 1 weist in seinem oberen Bereich einen Einlauf 12 auf, sowie einen unterhalb des Einlaufs 12 angeordneten Auslauf 13. Während des Betriebes der Vorrichtung wird sich ein Fördergutniveau 9 einstellen, dessen obere Lage im wesentlichen der Oberkante des Auslaufes 13 entspricht. Über dem Einlauf 12 wird beispielsweise eine in einer Kläranlage anfallende Mischung von Wasser und Sand in die Vorrichtung eingeleitet. Der untere Bodenbereich der Vorrichtung ist in einem Winkel zur Horizontalen angeordnet und ist, wie im Zusammenhang mit Fig. 2 dargestellt ist, so ausgebildet, daß er einen U-förmigen Bereich 7 umfaßt. In dem U-förmigen Bereich 7 ist ein Förderrohr 6 angeordnet, welches im wesentlichen zylindrisch ausgebildet ist und jeweils ein offenes oberes und unteres Ende aufweist. In dem Förderrohr 6 ist erfindungsgemäß eine untere Förderschnecke 2 sowie eine obere Förderschnecke 3 angeordnet, wobei die Schnecken fest mit dem Förderrohr 6 verbunden sind und sich mit diesem um dessen Drehachse 5 drehen. Der untere Bereich des Förderrohrs 6 weist einen Abstand zu der zugeordneten Wandung des Behälters 1 auf, so daß das in dem Behälter 1 befindliche Fördergut in den Innenraum des Förderrohrs 6 einlaufen kann. Die Schnecken 2, 3, welche eingängig mit dem Förderrohr 6 ausgebildet sind, sind in Form von schraubenförmig an dessen Innenfläche angeordneten Schneckengängen ausgebildet. An der Außenfläche des Förderrohrs 6 ist eine äußere Förderschnecke 8 angeordnet, welche eine Förderrichtung, d. h. eine Steigung aufweist, welche entgegengesetzt der Steigung oder Förderrichtung der Schnecken 2, 3 ist. Durch eine Drehung des Förderrohres 6 und damit der Schnecken 2, 3 wird das in dem Behälter 1 befindliche Gut nach oben gefördert, während gleichzeitig das an der Außenfläche des Förderrohrs 6, insbesondere im Bereich des U-förmigen Bereichs 7 befindliche Fördergut nach unten gefördert wird. Oberhalb des Fördergutniveaus 9 ist eine Lagerung für das Förderrohr an dem Behälter 1 vorgesehen, welche einen Kugeldrehkranz 10 umfaßt, der mit einer Außenverzahnung versehen ist. An dem Behälter 1 ist eine Antriebseinrichtung 4 in Form eines Elektromotors angeordnet, welcher ein Motorritzel 11 treibt, das mit der Außenverzahnung des Kugeldrehkranzes 10 kämmt.

Die Lagerung des Förderrohrs 6 ist somit oberhalb des Fördergutniveaus angeordnet, so daß das Fördergut nicht mit der Lagerung in Zusammenwirkung kommt und diese nicht beeinflussen kann.

Oberhalb des Fördergutniveaus 9 ist ein Übergangsbereich zwischen der unteren Schnecke 2 und der oberen Schnecke 3 vorgesehen, welcher in Fig. 1 nicht dargestellt ist und in Zusammenhang mit den Fig. 2 und 3 näher erläutert werden wird. Bis zur Wasserlinie 9 ist die Schnecke nicht unterbrochen.

Fig. 2 zeigt einen Schnitt entlang der Linie II-II von Fig. 1, wobei in Fig. 2 zum Zwecke der einfacheren Darstellung nur ein Teil des Behälters 1, nämlich dessen U-förmiger Bereich 7 abgebildet ist. Der Durchmesser des Förderrohrs 6 sowie der Außendurchmesser der äußeren Förderschnecke 8 sind in geeigneter Weise an den Innendurchmesser des U-förmigen Bereichs 7 angepaßt. In vorteilhafter Weise ist ein gewisser Zwischenraum zwischen dem Außenumfang der äußeren Förderschnecke 8 und der Innenfläche des U-förmigen Bereichs 7 vorgesehen, um ein Verklemmen, beispielsweise durch größere Steine, zu verhindern. Die untere Schnecke 2, welche in Form eines an dem Förderrohr 6 angeordneten Schneckenganges ausgebildet ist, weist in ihrem Mittelbereich einen Freiraum 15 auf. Die Dimensionierung dieses Freiraums hängt von den jeweiligen Anwendungsfällen ab. Es ist ebensogut möglich, die Schnecke 2 so auszubilden, daß kein Freiraum 15 vorgesehen ist.

Fig. 3 zeigt einen Schnitt durch das Förderrohr 6 sowie durch den Übergangsbereich zwischen der unteren Schnecke 2 und der oberen Schnecke 3. Die Betrachtungsrichtung der Fig. 2 stimmt mit der Förderrichtung überein, so daß die Blickrichtung auf einen unteren Endbereich 3a der oberen Schnecke 3 gerichtet ist.

Fig. 3 zeigt eine Seitenschnittansicht entlang der Linie IV-IV von Fig. 2. Aus Fig. 3 ist deutlich zu ersehen, daß der obere Endbereich 2a der unteren Schnecke 2 an einem höheren Niveau endet, als der untere Bereich 3a der oberen Schnecke 3 beginnt. Der Niveauunterschied H liegt bei dem gezeigten Ausführungsbeispiel in einem Größenbereich von 1 mm bis maximal der Steigung des Schneckensegmentes, wobei die Dimensionierung von dem zu fördernden Gut sowie von den weiteren Betriebsparametern abhängt. Das von der unteren Schnecke 2 geförderte Gut wird somit auf ein Niveau angehoben, welches oberhalb des unteren Endbereichs der oberen Schnecke 3 angeordnet ist, so daß zum einen eine sichere Übergabe des zu fördernden Gutes gewährleistet ist und zum anderen ein Zurücklaufen des geförderten Wassers ermöglicht wird. Wie in Fig. 2 gezeigt, ist es möglich, die Bereiche 2a, 3a der Schnecken 2, 3 um einen Betrag D seitlich zu überlappen. Diese Überlappung ist nicht erforderlich, es ist auch möglich, die Bereiche 2a, 3a zueinander fluchtend anzuordnen. Bei einer geringen Überlappung oder Überdeckung wird verhindert, daß das zu fördernde Gut an der Übergangsstelle zwischen der unteren Schnecke und der oberen Schnecke in nicht gewünschter Weise zurückgleitet. Auch im Zusammenhang mit den Fig. 2 und 3 ist darauf hinzuweisen, daß es nicht erforderlich ist, den gezeigten Freiraum 15 vorzusehen.

Der oberhalb des Fördergutniveaus 9 angeordnete Bereich des Förderrohrs 6 kann, alternativ zu dem gezeigten Ausführungsbeispiel, nicht einen oberen Schneckengang 3 von 360°, sondern eine Vielzahl von einzelnen Schnecken aufweisen, welche so ausgestaltet sein können, daß sie jeweils eine größere Steigung haben als der Versatz der Schneckengänge zueinander. Die Übergänge der einzelnen Schnecken werden erfindungsgemäß so ausgebildet, wie der beschriebene Übergang zwischen der unteren Schnecke 2 und der oberen Schnecke 3.

Die Erfindung ist nicht auf das gezeigte Ausführungsbeispiel mit nur einem Schneckengang beschränkt, es ist vielmehr auch möglich, mehrgängige Schnecken zu verwenden.

**Patentansprüche**

1. Vorrichtung zur Entwässerung mit einer zur Horizontalen geneigt angeordneten, in einem Behälter drehbaren, eine nach oben gerichtete Förderung bewirkenden Förderschnecke, dadurch gekennzeichnet, daß die Förderschnekke zumindest oberhalb eines oberen Fördergutniveaus (9) in zumindest eine untere Schnecke (2) und in zumindest eine obere Schnecke (3) unterteilt ist, welche gemeinsam mittels einer Antriebseinrichtung (4) drehbar sind und daß der jeweils obere Endbereich (2a) der unteren Schnecke (2) in axialer Richtung oberhalb des jeweils unteren Endbereiches (3a) der oberen Schnecke (3) angeordnet ist.

2. Vorrichtung nach Anspruch 1, dadurch gekennzeichnet, daß das obere Ende der unteren Schnecke (2) und das untere Ende der oberen Schnecke (3) jeweils in einer die Drehachse (5) eines Förderrohres (6) einschließenden Ebene angeordnet sind.

3. Vorrichtung nach Anspruch 2, dadurch gekennzeichnet, daß in Abhängigkeit des Fließverhaltens der zu trennenden Stoffe der obere Endbereich (2a) der unteren Schnecke (2) und der untere Endbereich (3a) der oberen Schnecke (3) in axialer Projektion entweder überlappend oder nicht überlappend angeordnet sind.

4. Vorrichtung nach einem der Ansprüche 1 bis 3, dadurch gekennzeichnet, daß der obere Endbereich (2a) der unteren Schnecke (2) und der untere Endbereich (3a) der oberen Schnecke (3) in axialer Richtung um einen Betrag von mindestens 1 mm versetzt sind.

5. Vorrichtung nach einem der Ansprüche 1 bis 4, dadurch gekennzeichnet, daß die Schnecken (2, 3) in dem mit diesen drehbaren Förderrohr (6) angeordnet sind.

6. Vorrichtung nach einem der Ansprüche 1 bis 5, dadurch gekennzeichnet, daß die Neigung der Drehachse (5) der Schnecken (2, 3) zwischen 5° und 45° zur Horizontalen beträgt.

7. Vorrichtung nach einem der Ansprüche 1 bis 6, dadurch gekennzeichnet, daß der Steigungswinkel der Schnecke (2, 3) in einem Bereich von 5° bis 40° ausgebildet ist.

8. Vorrichtung nach einem der Ansprüche 5 bis 7, dadurch gekennzeichnet, daß das Förderrohr (6) in einem, einen U-förmigen Querschnitt aufweisenden Bereich (7) des Behälters angeordnet ist.

9. Vorrichtung nach Anspruch 8, dadurch gekennzeichnet, daß die Außenfläche des Förderrohrs (6) mit einer äußeren Förderschnecke (8) versehen ist, deren Förderrichtung entgegengesetzt der der Schnecken (2, 3) ausgebildet ist.

10. Vorrichtung nach einem der Ansprüche 1 bis 9, dadurch gekennzeichnet, daß am unteren Ende (2b) der unteren Schnecke (2) das Förderrohr (6) ausgeklinkt ist.

11. Vorrichtung nach einem der Ansprüche 1 bis 10, dadurch gekennzeichnet, daß die Lagerung des Förderrohrs (6) an dem Behälter (1) oberhalb des Fördergutniveaus (9) angeordnet ist.

12. Vorrichtung nach Anspruch 11, dadurch gekennzeichnet, daß die Lagerung in Form eines außen verzahnten, mit einem Motorritzel (11) kämmenden Kugeldrehkranzes (10) ausgebildet ist.

13. Vorrichtung nach einem der Ansprüche 1 bis 12, dadurch gekennzeichnet, daß die obere Schnecke (3) in mehrere einzelne Teilschnekken unterteilt ist.

**Claims**

1. Apparatus for draining a screw conveyor which conveys in an upward direction, is mounted inclined to the horizontal and is rotatable in a container, characterised in that the screw conveyor is divided into at least one lower screw (2) and at least one upper screw (3) at least above a certain upper level (9) of product being conveyed, the upper and lower screws being rotatable in common by means of a drive mechanism (4), and in that the respective upper end region (2a) of the lower screw (2) is mounted axially above the respective lower end region (3a) of the upper screw (3).

2. Apparatus according to claim 1, characterised in that the upper end of the lower screw (2) and the lower end of the upper screw (3) are each arranged in a plane including the axis of rotation (5) of a conveyor tube (6).

**3.** Apparatus according to claim 2, characterised in that, as a function of the flow characteristic of the materials to be separated, the upper end region (2a) of the lower screw (2) and the lower end region (3a) of the upper screw (3) are mounted either overlapping or nun-overlapping in axial projection.

**4.** Apparatus according to one of claims 1 to 3, characterised in that the upper end region (2a) of the lower screw (2) and the lower end region (3a) of the upper screw (3) are offset in the axial direction by an amount of at least 1 mm.

**5.** Apparatus according to one of claims 1 to 4, characterised in that the screws (2, 3) are mounted in the conveyor tube (6) rotatable therewith.

**6.** Apparatus according to one of claims 1 to 5, characterised in that the incline of the axis of rotation (5) of the screws (2, 3) is between 5° and 45° to the horizontal.

**7.** Apparatus according to one of claims 1 to 6, characterised in that the pitch angle of the screw (2, 3) is in a range of 5° to 40°.

**8.** Apparatus according to one of claims 5 to 7, characterised in that the conveyor tube (6) is located in a region (7) of the container having a U-shaped cross-section.

**9.** Apparatus according to claim 8, characterised in that the exterior of the conveyor tube (6) is provided with an outer screw conveyor (8), whose direction of conveyance is opposite to that of the screws (2, 3).

**10.** Apparatus according to one of claims 1 to 9, characterised in that the conveyor tube (6) is mortised at the lower end (2b) of the lower screw (2).

**11.** Apparatus according to one of claims 1 to 10, characterised in that the bearing of the conveyor tube (6) on the container (1) is located above the level (9) of the product being conveyed.

**12.** Apparatus according to claim 11, characterised in that the bearing takes the form of a ball rotary ring (10) with external splines meshing with a motor pinion (11).

**13.** Apparatus according to one of claims 1 to 12, characterised in that the upper screw (3) is divided into a plurality of individual component screws.

**Revendications**

**1.** Dispositif de drainage comportant une vis convoyeuse inclinée par rapport à l'horizontale, montée rotative dans un récipient et exécutant un entraînement vers le haut, caractérisé en ce que la vie convoyeuse est subdivisée, au moins au-dessus d'un niveau supérieur (9) de la substance à convoyer, en au moins une vis inférieure (2) et en au moins une vis supérieure (3), qui peuvent être entraînées conjointement en rotation au moyen d'un dispositif d'entraînement (4), et que la zone d'extrémité supérieure (2a) de la vis inférieure (2) est disposée, dans la direction axiale, au-dessus de la zone d'extrémité inférieure (3a) de la vis supérieure (3).

**2.** Dispositif selon la revendication 1, caractérisé en ce que l'extrémité supérieure de la vis inférieure (2) et l'extrémité inférieure de la vis supérieure (3) sont disposées respectivement dans un plan qui contient l'axe de rotation (5) d'un tube de convoyage (6).

**3.** Dispositif selon la revendication 2, caractérisé en ce qu'en fonction du comportement d'écoulement des substances à séparer, la zone d'extrémité supérieure (2a) de la vis inférieure (2) et la zone d'extrémité inférieure (3a) de la vis supérieure (3) sont disposées soit en chevauchement soit sans chevauchement réciproque en projection axiale.

**4.** Dispositif selon l'une des revendications 1 à 3, caractérisé en ce que la zone d'extrémité supérieure (2a) de la vis inférieure (2) et la zone d'extrémité inférieure (3a) de la vis supérieure (3) sont décalées, dans la direction axiale, d'une distance d'au moins 1 mm.

**5.** Dispositif selon l'une des revendications 1 à 4, caractérisé en ce que les vis (2,3) sont disposées dans le tube de convoyage (6), qui peut tourner conjointement avec les vis.

**6.** Dispositif selon l'une des revendications 1 à 5, caractérisé en ce que l'inclinaison de l'axe de rotation (5) des vis (2,3) par rapport à l'horizontale est comprise entre 5° et 45°.

**7.** Dispositif selon l'une des revendications 1 à 6, caractérisé en ce que l'angle d'inclinaison des vis (2,3) se situe dans une gamme de 5° à 40°.

**8.** Dispositif selon l'une des revendications 5 à 7, caractérisé en ce que le tube de convoyage (6) est disposé dans une partie (7) du récipient, qui présente une section transversale en forme de U.

**9.** Dispositif selon la revendication 8, caractérisé en ce que le surface extérieure du tube de convoyage (6) est équipée d'une vis convoyeuse extérieure (8), dont le sens d'entraînement est opposé à celui des vis (2,3).

**10.** Dispositif selon l'une des revendications 1 à 9, caractérisé en ce que le tube de convoyage (6) est entaillé au niveau de l'extrémité inférieure (2b) de la vis inférieure (2).

**11.** Dispositif selon l'une des revendications 1 à 10, caractérisé en ce que le palier du tube de convoyage (6) est disposé sur le récipient (1) au-dessus du niveau (9) de la substance à entraîner.

**12.** Dispositif selon le revendication 11, caractérisé en ce que le palier est agencé sous la forme d'une couronne rotative à billes (10), qui est dentée extérieurement et engrène avec un pignon (11) d'un moteur.

**13.** Dispositif selon l'une des revendications 1 à 12, caractérisé en ce que la vie supérieure (3) est subdivisée en plusieurs éléments de vis individuels.

FIG.1

FIG.3

FIG.2